# EUROPÄISCHE PATENTSCHRIFT

(11) **EP 0 976 805 B1**
(45) Veröffentlichungstag und Bekanntmachung des Hinweises auf die Patenterteilung: **15.12.2004**
(21) Anmeldenummer: 99202392.9
(22) Anmeldetag: 21.07.1999
(51) Int. Cl.: C09K 11/02, H01J 29/22, H01J 29/20, H01J 29/18

(54) **Leuchtstoffzubereitung mit amidgruppen- oder urethangruppenhaltigem Bindemittel**
Phosphor manufacturing with a binder containing amide or urethane groups
Préparation de produit luminescent avec un liant contenant des groupes amide ou urethane

(30) Priorität: 30.07.1998 DE 19834377
(43) Veröffentlichungstag der Anmeldung: 02.02.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Picht, Friederike, Röntgenstrasse 24, 22335 Hamburg (DE); Czarnojan, Wolfram, Röntgenstrasse 24, 22335 Hamburg (DE); Feldmann, Claus, Röntgenstrasse 24, 22335 Hamburg (DE); Jungk, Hans-Otto, Röntgenstrasse 24, 22335 Hamburg (DE); Merikhi, Jacqueline, Röntgenstrasse 24, 22335 Hamburg (DE); van de Belt, Roel, Röntgenstrasse 24, 22335 Hamburg (DE); van Dongen, Anne Marie, Röntgenstrasse 24, 22335 Hamburg (DE); van der Heijden, Alexandra, Röntgenstrasse 24, 22335 Hamburg (DE)
(74) Vertreter: Volmer, Georg, Dipl.-Ing.

(56) Entgegenhaltungen:
- EP-A- 0 413 854
- EP-A- 0 841 386
- US-A- 4 128 674
- PATENT ABSTRACTS OF JAPAN vol. 012, no. 462 (C-549), 5. Dezember 1988 (1988-12-05) & JP 63 183980 A (TOSOH CORP), 29. Juli 1988 (1988-07-29)

## Beschreibung

Die Erfindung betrifft einen Bildschirm, insbesondere einen Farbildschirm für eine Kathodenstrahlröhre, mit einer Leuchtstoffschicht, die eine Leuchtstoffzubereitung aus einem Leuchtstoff mit einer Beschichtungsschicht mit einem wasserlöslichen organischen Bindemittel enthält. Die Erfindung betrifft auch eine Leuchtstoffzubereitung aus einem Leuchtstoff mit einer Beschichtungsschicht mit einem wasserlöslichen organischen Bindemittel.

Bildschirme von Kathodenstrahlröhren enthalten auf der Innenseite strukturierte Leuchtstoffschichten, die punkt- oder streifenförmige Muster aufweisen. Im Falle von Farbbildröhren ist jedes Leuchtstoffelement der Leuchtstoffschicht aus einem Tripel von Leuchtstoffelementen der drei Grundemissionsfarben Rot, Blau und Grün zusammengesetzt. Diese strukturierte Leuchtstoffschicht wird normalerweise in einem photochemischen Verfahren auf dem Schirmglas aufgebracht, wobei in der naßchemischen Variante Leuchtstoffsuspensionen und in der trockenen Variante Leuchtstofflacke verwendet werden. In dem naßchemischen Prozeß zur Beschichtung von Schirmglas mit Leuchtstoffen werden wäßrige Leuchtstoffsuspensionen eingesetzt, die z. B. Polyvinylalkohol (PVA) als Bindemittel und Ammoniumdichromat (ADC) als lichtempflindliche Komponente enthalten.

Die Eigenschaften der Leuchtstoffteilchen im naßchemischen Bildschirmprozeß sowohl bei der Verarbeitung in Suspension als auch bei der Bildung der Leuchtstoffschicht auf dem Bildschirmglas werden stark beeinflußt von den Oberflächeneigenschaften der Leuchtstoffpulver, aus denen die Leuchtstoffsuspensionen bereitet werden. Zur Steuerung der Oberflächeneigenschaften der Leuchtstoffpulver im Hinblick auf den Bildschirmprozeß hat es sich bewährt, die anorganischen Leuchtstoffpulver nach ihrer Herstellung mit chemisch andersartigen Beschichtungsschichten zu versehen. Außerdem erfordert das Pigmentieren von Leuchtstoffen zwecks Kontrastverstärkung im Bildschirm üblicherweise die Verwendung von zusätzlichem Bindemittel, das für eine genügende Haftung des Pigments auf dem Leuchtstoffmaterial sorgt.

Aus der EP 0 549 327 ist ein Leuchtstoff für eine Kathodenstrahlröhre bekannt, der Leuchtstoffteilchen und eine Oberflächenbehandlungssubstanz umfaßt, die auf die Leuchtstoffteilchen aufgetragen ist, wobei die Auftragssubstanz aus einer Mischung besteht, die ein Metallalginat, das mindestens eine Art eines Metalls enthält, welches aus der Gruppe bestehend aus Zink, Aluminium und einem Erdalkalimetall ausgewählt ist, und mindestens eine Art eines wasserlöslichen Bindemittels umfaßt, der aus der Gruppe bestehend aus Gummiarabikum, Gelatine, Polymethacrylamid und Polyvinylalkohol ausgewählt ist.

Es ist ein Nachteil dieses Leuchtstoffes, daß das Siebverhalten, die Haftung des Pigments auf dem Leuchtstoff sowie die Haftung der strukturierten Leuchtstoffschicht auf dem Bildschirmglas nicht optimal ist.

Heutzutage werden aber zunehmend höhere Anforderungen an die Verarbeitbarkeit von Leuchtstoffpulvern in Suspension sowie die Qualität von Bildschirmen in bezug auf Helligkeit, Farbreinheit, Schleierfreiheit, Konturenschärfe und Haftung der strukturierten Leuchtstoffbeschichtung gestellt.

Aufgabe der vorliegenden Erfindung ist es daher, einen Bildschirm mit einer Leuchtstoffschicht zur Verfügung zu stellen, bei dem eine optimale Helligkeit, Farbreinheit, Schleierfreiheit, Konturenschärfe und Haftung des Leuchtstoffmaterials auf dem Bildschirmglas erzielt wird.

Erfindungsgemäß wird die Aufgabe durch einen Bildschirm mit einer Leuchtstoffschicht, die eine Leuchtstoffzubereitung aus einem Leuchtstoff mit einer Beschichtungsschicht mit einem wasserlöslichen organischen Bindemittel, ausgewählt aus der Gruppe der Polyurethane, der Polyacrylamide, der Polyamidharze, der veretherten Melamin- und Melamin-Formaldehydverbindungen und der veretherten Harnstoff-Formaldehyd-Harze, und mit Sauerstoffverbindungen eines oder mehrerer Elemente ausgewählt aus der Gruppe der Erdalkalielemente und des Zinks, enthält.

Ein erfindungsgemäßer Bildschirm zeichnet sich durch eine überraschend verbesserte Bildschirmhelligkeit, Farbreinheit und Haftung des Leuchtstoffes auf dem Bildschirmglas aus. Weiterhin zeigt die Leuchtstoffschicht eine hohe Packungsdichte des Leuchtstoffmaterials in der Leuchtstoffschicht und damit optimale Schirmhelligkeit. Die Leuchtstoffschicht weist eine gute Homogenität, d.h. Vermeidung von Strukturen aufgrund des Fließverhaltens der Suspension, auf und ist frei von "Nadelstich"-Löchern. Außerdem ist die Leuchtstoffschicht scharf konturiert, die Dicke der Leuchtstoffschicht homogen. Die Abbildung der Schattenmasken-Struktur auf die strukturierte Leuchtstoffschicht zeigt eine hohe Präzision. Die einzelnen Leuchtstoffelemente haben scharfe Konturen und haften gut auf dem Schirmglas. Die Leuchtstoffschicht zeigt geringe Schleierbildung im nicht belichteten Schirmbereich.

Im Rahmen der vorliegenden Erfindung ist es bevorzugt, daß die Leuchtstoffzubereitung Polycarboxylate, Gelatine oder Siliciumdioxid enthält.

Es ist auch bevorzugt, daß der Feststoffanteil des wasserlöslichen organischen Bindemittels in der Leuchtstoffschicht 0.01 Gew.-% bis 1.0 Gew.-% bezogen auf den Leuchtstoff beträgt, daß der Anteil der Sauerstoffverbindungen der Erdalkalielemente und des Zinks in der Leuchtstoffschicht 0.01 Gew.-% bis 0.80 Gew.-% bezogen auf den Leuchtstoff beträgt und daß der Anteil des Siliciumdioxid berechnet als SiO₂ in der Leuchtstoffschicht 0.01 Gew.-% bis 1.0 Gew.-% bezogen auf den Leuchtstoff beträgt.

In Rahmen der vorliegenden Erfindung ist es besonders bevorzugt, daß das wasserlösliche organische Bindemittel eine Molekülmasse kleiner als 300 000, insbesondere eine Molekülmasse kleiner als 100 000 hat.

Im Rahmen der vorliegenden Erfindung ist es besonders bevorzugt, daß das organische Bindemittel ein Polyurethan mit einer Molekülmasse kleiner 20 000 ist. Eine derartige Leuchtstoffzubereitung zeichnet sich durch ein sehr gutes Siebverhalten aus.

Fernerhin kann es auch bevorzugt sein, daß die Sauerstoffverbindung eine Zink-Sauerstoffverbindung ist.

Im Rahmen der vorliegenden Erfindung kann es bevorzugt sein, daß das Siliciumdioxid aus Silikaten hergestellt ist oder aus kolloidalen SiO₂-Partikeln mit einer mittleren Partikelgröße 4 nm < d < 150 nm entsprechend einer spezifischen Oberfläche 25 m²/g < Aₛ < 550 m²/g besteht.

Es kann ebenfalls bevorzugt sein, daß das Gewichtsverhältnis der SiO₂-Partikel (berechnet als SiO₂) zu der Gesamtmenge der Metall-Sauerstoffverbindungen der Erdalkalielemente und des Zinks 1:10 bis 30:1 beträgt und das Gewichtsverhältnis der SiO₂-Partikel zu der Gesamtmenge des organischen Bindemittels 1:30 bis 30:1 beträgt.

Es kann auch bevorzugt sein, daß die Beschichtung 0.01 Gew.-% bis 15 Gew.-% eines Farbfilterpigmentes enthält.

Im Rahmen der vorliegenden Erfindung ist es weiterhin besonders bevorzugt, daß das wasserlösliche organische Bindemittel mindestens eine Verbindung ausgewählt aus der Gruppe der Polyacrylamide und Gelatine und mindestens einer Verbindung ausgewählt aus der Gruppe der veretherten Melamin- und Melamin-Formaldehydverbindungen und der veretherten Harnstoff-Formaldehyd-Harze enthält, wobei das Gewichtsverhältnis der Verbindungen ausgewählt aus der Gruppe der Polyacrylamide und der Gelatine zu der Gesamtmenge der Verbindungen ausgewählt aus der Gruppe der veretherten Melaminund Melamin-Formaldehydverbindungen und der veretherten Harnstoff-Formaldehyd-Harze 1:5 bis 20:1 beträgt.

Eine derartige Leuchtstoffschicht zeichnet sich durch gute Konturenschärfe der strukturierten Leuchtstoffschicht und eine sehr gute Haftung aus. Außerdem zeigen derartig auf den Leuchtstoffkörnern befestigten Pigmentpartikel eine sehr gute Haftung auf dem Leuchtstoff.

Die Erfindung betrifft auch eine Leuchtstoffzubereitung aus einem Leuchtstoff mit einer Beschichtungsschicht mit einem wasserlöslichen organischen Bindemittel, ausgewählt aus der Gruppe der Polyurethane, der Polyacrylamide, der Polyamidharze, der veretherten Melamin- und Melamin-Formaldehydverbindungen, der veretherten Harnstoff-Formaldehyd-Harze, und mit Sauerstoffverbindungen eines oder mehrerer Elemente ausgewählt aus der Gruppe der Erdalkalielemente und des Zinks. Eine derartige Leuchtstoffzubereitung läßt sich sehr leicht verarbeiten, da sie ein sehr gutes Siebverhalten des Pulvers und eine hohe Filtrierbarkeit der Suspension auch nach längerer Zeit und bei niedrigeren pH-Werten zeigt. Die außergewöhnlich gute Formstabilität der Suspension erfindungsgemäß beschichteter Leuchtstoffe wird angezeigt durch die gute Stabilität der Teilchengrößenverteilung bei Zusatz von Elektrolytlösung und Behandlung mit Ultraschall. Weitere Vorteile sind die verbesserte Haftung des Leuchtstoffes auf dem Bildschirmglas, die sehr geringe Schleierbildung, die hohe Farbreinheit infolge exzellenter Haftung des Pigmentes auf den Leuchtstoffkörnern sowie die hohe Packungsdichte und sehr gute Homogenität der entsprechenden Leuchtstoffschichten.

In der Suspension zeigt die Leuchtstoffzubereitung eine hohe Stabilität in Form einer hohen Filtrierbarkeit, eines verschwindenden Anteils von losem Pigmentmaterial sowie der Unempfindlichkeit der Teilchengrößenverteilung gegenüber dem Zusatz von Elektrolytlösung und einer Behandlung mit Ultraschall über längere Zeit bei kritischen pH-Werten. Sie zeichnet sich auch durch ein sehr gutes Siebverhalten aus.

Nachfolgend wird die Erfindung anhand zwei Figuren und von Beispielen näher erläutert.
Fig. 1 zeigt die Formstabilität von erfindungsgemäßen Leuchtstoffzubereitungen im Vergleich zu Referenz-Leuchtstoffzubereitungen.
Fig. 2 zeigt die Pigmenthaftung bei erfindungsgemäßen Leuchtstoffzubereitungen im Vergleich zu einer Referenz-Leuchtstoffzubereitung.

Für die erfindungsgemäß Leuchtstoffzubereitung können als Ausgangsmaterialien alle üblichen Leuchtstoffe verwendet werden, z. B. blaues ZnS:Ag, grünes ZnS:Cu,Au, grünes ZnS:Cu oder rotes Y₂O₂S:Eu. Es kann auch bevorzugt sein, daß das Ausgangsmaterial ein bereits pigmentierter Leuchtstoff ist, der zur Verbesserung des Bildkontrastes mit Farbfilterpigmenten beschichtet ist, z. B. mit CoAl₂O₄ pigmentiertes ZnS:Ag oder mit Fe₂O₃ pigmentiertes Y₂O₂S:Eu. Das Farbpigment kann entweder in einem Beschichtungsprozeß zusammen mit den erfindungsgemäßen Beschichtungsbestandteilen, und zwar mit Sauerstoffverbindungen eines oder mehrerer Elemente ausgewählt aus der Gruppe der Erdalkalielemente und des Zinks, sowie mit einer oder mehreren Komponenten eines wasserlöslichen organischen Bindemittels mit Amid- oder Urethangruppen ausgewählt aus der Gruppe der Polyurethane, der Polyacrylamide, der Polyamidharze, der veretherten Melamin- und Melamin-Formaldehydverbindungen, der veretherten Harnstoff-Formaldehyd-Harze sowie mit Gelatine sowie gegebenenfalls mit Siliciumdioxid abgeschieden werden oder in einem getrennten Beschichtungsprozeß auf die Leuchtstoffteilchen aufgebracht werden und eine separate Beschichtung bilden.

Die Leuchtstoffbeschichtung enthält weiterhin einen oder mehrere wasserlösliche organische Bindemittel mit Amid- oder Urethangruppen ausgewählt aus der Gruppe der Polyurethane, der Polyacrylamide, der Polyamidharze, der veretherten Melamin- und Melamin-Formaldehydverbindungen, der veretherten Harnstoff-Formaldehyd-Harze sowie gegebenenfalls Polycarboxylate und Gelatine. Mit Ausnahme von Natriumalginat und Gelatine liegen sämtliche zuvor genannten organischen Bindemittel entweder als flüssiges Harz oder als wäßrige Lösung vor und können beliebig mit Wasser verdünnt werden. Wie Natriumalginat liegt Gelatine in fester Form vor, z. B. als Pulver und kann durch Erhitzen in Wasser gelöst werden.

Die Leuchtstoffbeschichtung enthält auch Sauerstoffverbindungen eines oder mehrerer Elemente ausgewählt aus der Gruppe der Erdalkalielemente und des Zinks. Im Rahmen der vorliegenden Erfindung sollen unter "Sauerstoffverbindung" die Hydroxide und Oxide dieser Elemente verstanden werden.

Die Leuchtstoffbeschichtung enthält gegebenenfalls weiterhin Siliciumdioxid, das entweder in ionischer Form, z. B. als Kalium- oder Natrium-Wasserglas oder in Form von kolloidalen SiO₂-Partikeln vorliegen kann.

Das Gewichtsverhältnis von Gesamtbeschichtungsmaterial zu Leuchtstoff in der Leuchtstoffzubereitung kann 0.10 Gew.-% bis 2.0 Gew.-% betragen.

Zur Herstellung der erfindungsgemäßen Leuchtstoffzubereitung wird eine Leuchtstoff-Aufschlämmung mit verdünntem Ammoniak auf mindestens pH 9 eingestellt und mit einem Silikat z.B. Kalium-Wasserglas oder kolloidalen SiO₂-Partikeln mit einer Teilchengröße 4 nm < d < 30 nm vermahlen, wobei gegebenenfalls auch ein anderes Dispergiermittel, z.B. ein Polycarboxylat verwendet wird, gegebenenfalls eine z.B. mit Polyacrylat dispergierte Pigmentsuspension zusammen mit der wäßrigen Leuchtstoff-Aufschlämmung vermahlen wird, der Leuchtstoff-Aufschlämmung eine oder mehrere wäßrige Lösungen der organischen Bindemittel mit Amid- oder Urethangruppen ausgewählt aus der Gruppe der Polyurethane, der Polyacrylamide, der Polyamidharze, der veretherten Melamin- und Melamin-Formaldehydverbindungen, der veretherten Harnstoff-Formaldehyd-Harze und gegebenenfalls der Gelatine hinzugefügt werden, der Leuchtstoff-Aufschlämmung gegebenenfalls eine stabilisierte Pigmentsuspension hinzugefügt wird, der Leuchtstoff-Aufschlämmung gegebenenfalls eine Lösung von kolloidalen SiO₂-Partikeln mit einer mittleren Partikelgröße 50 nm < d < 150 nm hinzugefügt wird, wobei die Reihenfolge der Hinzugabe von organischem Bindemittel, kolloidalen SiO₂-Partikeln und Pigment gegebenenfalls vertauscht werden kann, der Leuchtstoff-Aufschlämmung eine oder mehrere Salzlösungen eines oder mehrerer Elemente ausgewählt aus der Gruppe der Erdalkalielemente und des Zinks hinzugefügt werden und der pH-Wert der Leuchtstoff-Aufschlämmung auf mindestens pH 7.0 angehoben wird und nach dem Filtrieren der Leuchtstoff bei 110 °C bis 200 °C getrocknet wird. Mit diesem Beschichtungsverfahren können Leuchtstoffpulver haftfest mit Siliciumdioxid, Pigmenten, organischen Bindemitteln mit Amid- oder Urethangruppen ausgewählt aus der Gruppe der Polyurethane, der Polyacrylamide, der Polyamidharze, der veretherten Melamin- und Melamin-Formaldehydverbindungen, der veretherten Harnstoff-Formaldehyd-Harze sowie mit den Sauerstoffverbindungen der Elemente der Gruppe der Erdalkalielemente und des Zinks beschichtet werden.

Beispielsweise kann die erfindungsgemäße Leuchtstoffzubereitung hergestellt werden, indem nacheinander die folgenden Verfahrensschritte durchgeführt werden:
a) Zunächst wird die Leuchtstoff-Aufschlämmung mit verdünntem Ammoniak auf mindestens pH 9 eingestellt. Im anschließenden Mahlprozeß wird der rohe Leuchtstoff mittels eines Silikates, z. B. Kalium-Wasserglas oder mittels eines feinteiligen SiO₂-Kolloids mit einer Teilchengröße 4 nm < d < 30 nm entsprechend einer spezifischen Oberfläche von 100 m²/g < Aₛ < 550 m²/g dispergiert. Die Menge des ionischen oder feinteiligen Siliciumdioxids (berechnet als SiO₂) beträgt üblicherweise 0.01 Gew.-% bis 0.15 Gew.-% bezogen auf den rohen Leuchtstoff. Gegebenenfalls kann in Verfahrensschritt a) auch ein anderes Dispergiermittel verwendet werden, z. B. ein Polycarboxylat. Gegebenenfalls kann in Verfahrensschritt a) gleichzeitig mit dem Mahlen des Leuchtstoffes die naßchemische Pigmentierung des Leuchtstoffes durchgeführt werden, indem z. B. eine mit Polyacrylat stabilisierte Pigmentsuspension der wäßrigen Leuchtstoff-Aufschlämmung hinzugefügt wird und der Leuchtstoff zusammen mit der Pigmentsuspension vermahlen wird.
b) Zu dieser Leuchtstoff-Aufschlämmung werden die wäßrigen Lösungen eines oder mehrerer wasserlöslicher organischer Bindemittel mit Amid- oder Urethangruppen ausgewählt aus der Gruppe der Polyurethane, der Polyacrylamide, der Polyamidharze, der veretherten Melamin- und Melamin-Formaldehydverbindungen, der veretherten Harnstoff-Formaldehyd-Harze sowie gegebenenfalls Gelatine hinzugefügt. Die Gesamtmenge des organischen Bindemittels beträgt üblicherweise 0.01 Gew.-% bis 1.0 Gew.-% bezogen auf den rohen Leuchtstoff. Gegebenenfalls wird der Leuchtstoff-Aufschlämmung die Lösung eines grobteiligen SiO₂-Kolloids mit einer mittleren Partikelgröße 50 nm < d < 150 nm entsprechend einer spezifischen Oberfläche von 25 m²/g < Aₛ < 70 m²/g hinzugefügt. Die Menge dieses grobteiligen SiO₂-Kolloids (berechnet als SiO₂) beträgt üblicherweise 0.01 Gew.-% bis 1.0 Gew.-% bezogen auf den rohen Leuchtstoff, wobei das Gewichtsverhälntis des SiO₂ zu der Gesamtmenge der Metall-Sauerstoffverbindungen 1:2 nicht unterschreiten soll und das Gewichtsverhältnis des SiO₂ zu der Gesamtmenge des organischen Bindemittels 5:1 nicht unterschreiten soll. Gegebenenfalls kann in Verfahrensschritt b) auch die naßchemische Pigmentierung des Leuchtstoffes durch Zugabe einer z.B. mit Polyacrylat dispergierten Pigmentsuspension durchgeführt werden. Die Zugabe von organischen Bindemitteln, des kolloidalen SiO₂ sowie des Pigments kann in beliebiger Reihenfolge stattfinden.
c) Eine oder mehrere wäßrige Salzlösungen eines oder mehrerer Elemente ausgewählt aus der Gruppe der Erdalkalielemente und des Zinks, z. B. ihre Nitrate, Sulfate, Chloride und Acetate werden der Leuchtstoff-Aufschlämmung hinzugefügt, wobei der Anteil der Sauerstofiverbindungen der Erdalkalielemente und des Zinks 0.01 Gew.-% bis 1.0 Gew.-% bezogen auf den rohen Leuchtstoff beträgt. Außerdem beträgt das Gewichtsverhältnis des Siliciumdioxids zu der Gesamtmenge der Metalloxide üblicherweise 1:2 bis 10:1.
d) Mit ammoniakalischer Lösung, verdünnter Kalilauge oder Natronlauge wird der pH-Wert der Leuchtstoff-Aufschlämmung auf mindestens pH 7 angehoben.
e) Den so beschichteten Leuchtstoff läßt man sedimentieren. Es wird dekantiert, gegebenenfalls gewaschen und abfiltriert.
f) Bei 110 bis 200 °C wird die Leuchtstoffzubereitung an Luft einige Stunden getrocknet.

Der Bildschirm kann z. B. nach dem "Flowcoating" Verfahren mit der erfindungsgemäßen Leuchtstoffzubereitung folgendermaßen versehen werden. Das beschichtete Leuchtstoffpulver einer Emissionsfarbe wird in einer mittels z. B. Ammoniumdichromat (ADC) photoaktivierten Bindemittellösung z. B. auf Polyvinylalkohol(PVA)-Basis dispergiert. Die einzelnen Komponenten der Leuchtstoffsuspension, d.h. Leuchtstoffpulver, Wasser, Bindemittel, Dispergiermittel, Stabilisatoren und lichtempfindliche Komponente werden abhängig von dem jeweiligen Leuchtstoff und den Verarbeitungsbedingungen der Suspension im Bildschirmprozeß in vorgegebener Reihenfolge und Konzentration nach einer definierten Rezeptur gemischt. Die Suspension der Leuchtstoffzubereitung wird auf die Innenseite der in der "Flowcoat"-Maschine vorbereiteten Bildschirmglasplatte aufgebracht. Durch die Rotation des Bildschirmes verteilt sich die Leuchtstoffsuspension gleichmäßig auf dem Bildschirm. Überschüssige Suspension wird abgeschleudert. Die gebildete feuchte Leuchtstoffschicht wird getrocknet. Auf der Innenseite der Bildschirmglasplatte wird eine Schattenmaske in einigem Abstand von der Leuchtstoffschicht angebracht. Durch diese Schattenmaske wird die Leuchtstoffschicht mit ultraviolettem Licht bestrahlt, wodurch die bestrahlten Bereiche der Leuchtstoffschicht aushärten. Mit warmem Wasser wird die Leuchtstoffschicht entwickelt, d.h. die nicht ausgehärteten Teile der Leuchtstoffschicht entfernt. Die strukturierte Leuchtstoffschicht wird getrocknet. Diese Prozeßschritte werden nacheinander für alle drei Leuchtstofftypen in den Emissionsfarben Grün, Blau und Rot durchgeführt. Dann wird der Bildschirm auf circa 440 °C aufgeheizt, um das in der Leuchtstoffschicht verbliebene Bindemittel zu entfernen.

### Ausführungsbeispiel 1

650 g rot leuchtendes Y₂O₂S:Eu Leuchtstoffpulver wird mit 0.1 N HCl-Lösung bei pH 2 bis 3 gewaschen und anschließend dekantiert. Dann wird mit Wasser mehrere Male gewaschen und dekantiert, bis daß die Leuchtstoffsuspension säurefrei ist. Es werden 10.83 g K₂SiO₃-Lösung mit 3.0 SiO₂-Gew.-% Lösung als Dispergiermittel hinzugefügt. Mit 1.0 Gew.-% KOH-Lösung wird ein pH-Wert von 8.8 eingestellt. Nach Hinzufügen von Mahlkörpern wird diese Leuchtstoffsuspension 80 Minuten naßgemahlen. Nach Abtrennung der Mahlkörper, Verdünnen auf ein Suspensionsvolumen von 2.0 L mit Wasser und Naßsieben erhält man die stabilisierte Leuchtstoffsuspension. Der gut dispergierten Suspension des Y₂O₂S:Eu-Leuchtstoffes mit einem pH-Wert von 7.50 wird 32.5 g einer 1.0%igen Lösung von Polyacrylsäure mit Molekülmasse 75000 hinzugefügt. Die Leuchtstoffsuspension wird 5 Minuten lang gerührt. Dann wird der Leuchtstoffsuspension 19.2 g einer 1.0%igen Polyacrylamid-Lösung mit Molekülmasse 100 000 zugegeben und wiederum 5 Minuten gerührt. Danach werden 13.0 g einer Lösung mit 1.0 Gew.-% eines Polyurethans mit Molekülmasse < 6000 hinzugefügt und 5 Minuten gerührt. Schließlich werden der Leuchtstoffsuspension 18.7 g einer 1.0%igen Lösung eines methoxymethylierten Melamins zugegeben und wiederum 5 Minuten gerührt. Es wird 9.75 g ZnSO₄-Lösung mit 4.0 Gew.-% ZnO hinzugefügt und wiederum 5 min gerührt. Dabei sinkt der pH-Wert auf circa pH 5.0. Durch Zugabe von 1.0 Gew.-% KOH-Lösung wird der pH-Wert auf pH 8.3 angehoben.

Nachdem die Leuchtstoffsuspension weitere 15 Minuten gerührt wurde, läßt man die Suspension des beschichteten Y₂O₂S:Eu-Leuchtstoffes sedimentieren, dekantiert und wäscht 1 Mal mit 1.3 Liter Wasser. Schließlich wird der beschichtete Leuchtstoff abfiltriert und circa 16 Stunden bei 120 °C an Luft getrocknet.

### Ausführungsbeispiel 2

800 g blau leuchtendes Leuchtstoffpulver wird gewaschen und mit 0.5 Gew.-% eines SiO₂-Kolloids mit der Partikelgröße 22 nm dispergiert.

Der gut dispergierten Suspension des ZnS:Ag-Leuchtstoffes mit einem pH-Wert von 8.9 wird 12.8 g einer Lösung von 1.0%igen Polyacrylsäure mit Molekülmasse 75 000 hinzugefügt und 5 Minuten lang gerührt. Dann wird 14.2 g einer Lösung mit 1.0 Gew.-% Polyacrylamid mit Molekülmasse 100 000 hinzugefügt und wiederum 5 Minuten lang gerührt. Danach wird der Leuchtstoffaufschlämmung 6.9 g einer 1.0%igen Lösung eines methoxymethylierten Melamins hinzugefügt und 5 Minuten lang gerührt. Der Leuchtstoffaufschlämmung werden 66.7 g einer 3.0%igen Lösung eines SiO₂-Kolloids mit einer mittleren Partikelgröße von 40 nm hinzugefügt und 5 Minuten lang gerührt.

Schließlich werden 25.0 g einer ZnSO₄ -Lösung mit 4.0 Gew.-% ZnO der Leuchtstoffaufschlämmung hinzugefügt und 15 Minuten lang gerührt. Durch Zugabe von 1molarer Ammoniaklösung wird der pH-Wert der Leuchtstoff-Aufschlämmung auf pH 8.4 angehoben. Nachdem die Suspension weitere 30 Minuten gerührt wurde, läßt man die Suspension des beschichteten ZnS:Ag-Leuchtstoffes sedimentieren, dekantiert und wäscht zweimal mit ca. 1.7 l Wasser. Schließlich wird der beschichtete Leuchtstoff abfiltriert und circa 16 h bei 120°C an Luft getrocknet

### Ausführungsbeispiel 3

700 g blau leuchtendes ZnS:Ag Leuchtstoffpulver wird gewaschen und in einer wäßrigen Leuchtstoff-Aufschlämmung nach Hinzufügen von 3 Gew.-% feinteiligem CoAl₂O₄-Pigment, das in einer mit Polyacrylat stabilisierten Suspension vorliegt, dispergiert. Der pH-Wert wird mit verdünntem Ammoniak auf pH 10.0 eingestellt. Nach 2 Stunden erhält man die stabilisierte Leuchtstoffsuspension, die anschließend naß gesiebt wird. Der pH-Wert der Leuchtstoffsuspension wird auf pH 5 eingestellt. 1.1 g Gelatine wird in 110 ml Wasser, das zuvor auf 60 °C erwärmt wurde, 15 Minuten gerührt und dabei gelöst. Die Gelatinelösung wird mit 8 ml einer 1:10 verdünnten Lösung von methoxymethyliertem Melamin versetzt. Diese Bindemittellösung wird langsam der Leuchtstoffsuspension hinzugefügt. Mit 1 M Ammoniaklösung wird dann ein pH-Wert von 8 eingestellt und 10 Minuten gerührt. Danach werden 9.0 g einer 4.0 ZnO-Gew.-% Zn(NO₃)₂-Lösung der Leuchtstoffsuspension hinzugefügt. Der pH-Wert wird auf 7 eingestellt. Dann wird die Leuchtstoffsuspension mindestens 30 Minuten gerührt. Die heiße Lösung wird abfiltriert. Das so beschichtete Leuchtstoffpulver wird bei 125 °C an Luft getrocknet.

### Meßergebnisse

Tabelle 1 veranschaulicht den positiven Einfluß erfindungsgemäßer Beschichtungszusammensetzungen auf die Verarbeitbarkeitkeit des Leuchtstoffpulvers, und zwar wird die Siebzeit des beschichteten roten Leuchtstoffpulvers durch die Anwesenheit von Polyurethan als organischem Bindemittel deutlich verringert. Die erfindungsgemäßen Beschichtungen C und D zeigen, daß auch bei Anwesenheit weiterer organischer Bindemittel wie Polyacrylsäure (Beschichtung D) oder Natriumalginat (Beschichtungen C bis E) das sehr gute Siebverhalten (Siebzeiten von 15 bis 26 Minuten) infolge des Zusatzes an urethangruppenhaltigem Bindemittel erhalten bleibt. Ohne Zusatz von Polyurethan als organischem Bindemittel hingegen sind die Siebzeiten mit 60 bis 70 Minuten (Referenzbeschichtungen A und B) relativ hoch.

**Tabelle 1**

| Einfluß des Polyurethan-Binders auf die Siebzeit von 570 g beschichteten Y₂O₂S:Eu Leuchtstoffpulvern. | | |
|---|---|---|
| **Probe** | **Beschichtungszusammensetzung** | **Siebzeit / min** |
| **Leuchtstoffzubereitungen ohne Polyurethan** | | |
| **A** | 0.050 Gew.-% SiO₂ | 70 |
| | 0.11 Gew.-% Gelatine | |
| | 0.0495 Gew.-% Na-Alginat | |
| | 0.060 Gew.-% ZnO aus ZnSO₄ | |
| **B** | 0.050 Gew.-% SiO₂ | 60 |
| | 0.12 Gew.-% methoxymeth. Melamin | |
| | 0.0495 Gew.-% Na-Alginat | |
| | 0.060 Gew.-% ZnO aus ZnSO₄ | |

| **Leuchtstoffzubereitungen mit Polyurethan** | | |
|---|---|---|
| **C** | 0.050 Gew.-% SiO₂ | 26 |
| | 0.084 Gew.-% Polyurethan | |
| | 0.0436 Gew.-% Na-Alginat | |
| | 0.060 Gew.-% ZnO aus ZnSO₄ | |
| **D** | 0.050 Gew.-% SiO₂ aus K₂SiO₃ | 15 - 20 |
| | 0.050 Gew.-% Polyacrylsäure | |
| | 0.050 Gew.-% Polyurethan | |
| | 0.0275 Gew.-% Na-Alginat | |
| | 0.060 Gew-% ZnO aus ZnSO₄ | |

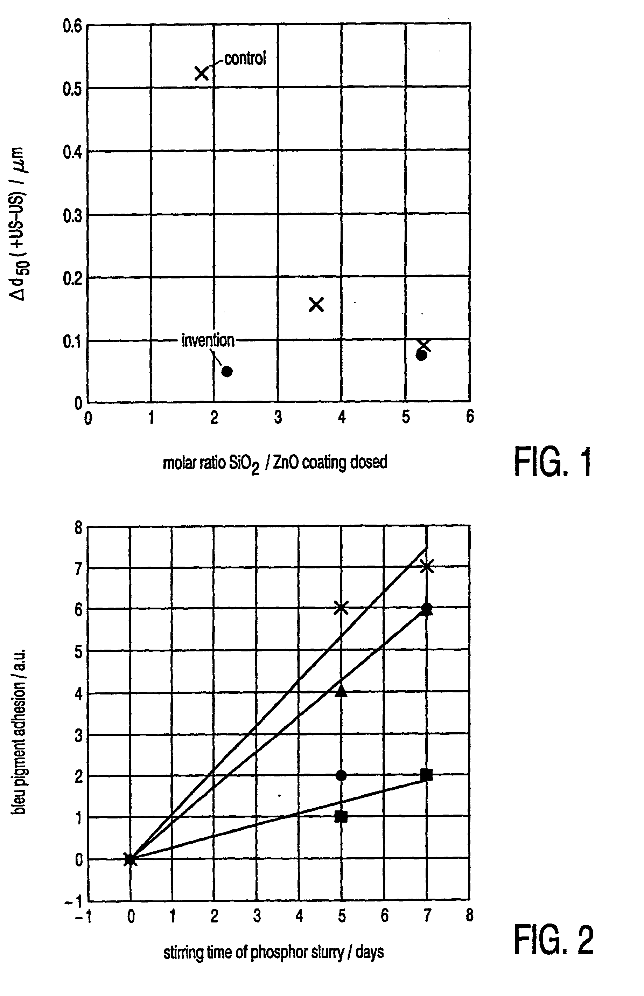

Fig. 1 zeigt den positiven Einfluß erfindungsgemäßer Beschichtungszusammensetzungen auf die Stabilität von ZnS-Leuchtstoffsuspensionen, und zwar verbessert die Anwesenheit von Polyurethan als organisches Bindemittel (Beschichtungen •) im Vergleich zu vollkommen anorganischen Beschichtungszusammensetzungen aus teilchenförmigem Siliciumdioxid und ZnO (Beschichtungen x) die Stabilität der Partikelgrößenverteilung der Leuchtstoffsuspension ("Formstabilität") nach einer einminütigen Ultraschallbehandlung unter Einwirkung von Elektrolytlösung. Gemessen wurde die mittlere Partikelgröße d₅₀ der Leuchtstoffsuspension vor (-US) und nach (+US) der Ultra-schallbehandlung mit der Coulter Methode, wobei die "Formstabilität" der Suspension um so besser ist, je kleiner die Differenz der Meßwerte ist. Insbesondere bei einem höheren Anteil von Metalloxid (kleines SiO₂ / ZnO - Verhältnis) in der Beschichtung zeigt sich der stabilisierende Effekt durch den Zusatz des organischen Bindemittels.

Fig. 2 zeigt den positiven Einfluß erfindungsgemäßer Beschichtungszusammensetzungen auf die Pigmenthaftung. Wird eine Suspension von pigmentiertem ZnS:Ag,Al-Leuchtstoff, der mit CoAl₂O₄ pigmentiert ist, in einer PVA/ADC Suspension mehrere Tage lang gerührt, so ergibt sich eine deutliche Verminderung des Anteils an losem Pigment, der gemessen wird als Blaufärbung des Suspensionsüberstandes nach 24 Stunden Sedimentation, wenn das organische Bindemittel außer Gelatine (Beschichtung x) auch veretherte, und zwar hier zwei verschiedene methoxymethylierte *Melaminverbindungen* enthält (Beschichtungen ▲●■). Schließlich zeigt die Kombination der beiden zuvor genannten organischen Bindemittel mit Gelatine (Beschichtung■) die beste Pigmenthaftung.

## Patentansprüche

1. Bildschirm mit einer Leuchtstoffschicht, die eine Leuchtstoffzubereitung aus einem Leuchtstoff mit einer Beschichtungsschicht mit einem wasserlöslichen organischen Bindemittel, ausgewählt aus der Gruppe der Polyurethane, der Polyacrylamide, der Polyamidharze, der veretherten Melamin- und Melamin-Formaldehydverbindungen und der veretherten Harnstoff-Formaldehyd-Harze, und mit Sauerstoffverbindungen eines oder mehrerer Elemente ausgewählt aus der Gruppe der Erdalkalielemente und des Zinks, enthält.

2. Bildschirm mit einer Leuchtstoffschicht gemäß Anspruch 1,
**dadurch gekennzeichnet,**
**daß** die Leuchtstoffzubereitung weiterhin Polycarboxylate, Gelatine oder Siliciumdioxid enthält.

3. Bildschirm mit einer Leuchtstoffschicht gemäß Anspruch 1,
**dadurch gekennzeichnet,**
**daß** der Feststoffanteil des wasserlöslichen organischen Bindemittels in der Leuchtstoffschicht 0.01 Gew.-% bis 1.0 Gew.-% bezogen auf den Leuchtstoff beträgt, daß der Anteil der Sauerstoffverbindungen der Erdalkalielemente und des Zinks in der Leuchtstoffschicht 0.01 Gew.-% bis 0.80 Gew.-% bezogen auf den Leuchtstoff beträgt, und daß der Anteil des Siliciumdioxids berechnet als SiO₂ in der Leuchtstoffschicht 0.01 Gew.-% bis 1.0 Gew.-% bezogen auf den Leuchtstoff beträgt.

4. Bildschirm mit einer Leuchtstoffschicht gemäß Anspruch 1,
**dadurch gekennzeichnet,**
**daß** das wasserlösliche organische Bindemittel eine Molekülmasse kleiner als 300 000, insbesondere eine Molekülmasse kleiner als 100 000 hat.

5. Bildschirm mit einer Leuchtstoffschicht gemäß Anspruch 1,
**dadurch gekennzeichnet,**
**daß** das wasserlösliche organische Bindemittel eine Polyurethanverbindung mit einer Molekülmasse kleiner 20 000 ist.

6. Bildschirm mit einer Leuchtstoffschicht gemäß Anspruch 1,
**dadurch gekennzeichnet,**
**daß** die Sauerstoffverbindung eine Zink-Sauerstoffverbindung ist.

7. Bildschirm mit einer Leuchtstoffschicht gemäß Anspruch 1,
**dadurch gekennzeichnet,**
**daß** das Siliciumdioxid aus Silikat-Partikeln oder kolloidalen SiO₂-Partikel mit einer mittleren Partikelgröße 4 nm < d < 150 nm entsprechend einer spezifischen Oberfläche 25 m²/g < Aₛ < 550 m²/g besteht.

8. Bildschirm mit einer Leuchtstoffschicht gemäß Anspruch 1,
**dadurch gekennzeichnet,**
**daß** das Gewichtsverhältnis der SiO₂-Partikel (berechnet als SiO₂) zu der Gesamtmenge der Merall-Sauerstoffverbindungen der Erdalkalielemente und des Zinks 1:10 bis 30:1 beträgt und das Gewichtsverhältnis der SiO₂-Partikel zu der Gesamtmenge des organischen Bindemittels 1:30 bis 30:1 beträgt.

9. Bildschirm mit einer Leuchtstoffschicht gemäß Anspruch 1,
**dadurch gekennzeichnet,**
**daß** die Beschichtung 0.01 Gew.-% bis 15 Gew.-% eines Farbfilterpigments enthält.

10. Bildschirm mit einer Leuchtstoffzubereitung gemäß Anspruch 1,
**dadurch gekennzeichnet,**
**daß** das wasserlösliche organische Bindemittel eine Verbindung ausgewählt aus der Gruppe de Polyacrylamide und der Gelatine und mindestens einer Verbindung ausgewählt aus der Gruppe der veretherten Melamin- und Melamin-Formaldehydverbindungen und der veretherten Harnstoff-Formaldehyd-Harze enthält, wobei das Gewichtsverhältnis der Verbindungen ausgewählt aus der Gruppe der Polyacrylamide und der Gelatine zu der Gesamtmenge der Verbindungen ausgewählt aus der Gruppe der veretherten Melaminund Melamin-Formaldehydverbindungen und der veretherten Harnstoff-Formaldehyd-Harze 1:5 bis 20:1 beträgt.

11. Leuchtstoffzubereitung aus einem Leuchtstoff mit einer Beschichtungsschicht mit einem wasserlöslichen organischen Bindemittel, ausgewählt aus der Gruppe der Polyurethane, der Polyacrylamide, der Polyamidharze, der veretherten Melamin- und Melamin-Formaldehydverbindungen, der veretherten Harnstoff-Formaldehyd-Harze, und mit Sauerstoffverbindungen eines oder mehrerer Elemente ausgewählt aus der Gruppe der Erdalkalielemente und des Zinks.

## Claims

1. A display screen comprising a phosphor layer which includes a phosphor composition of a phosphor with a coating comprising a water-soluble organic binder, which is selected from the group formed by the polyurethanes, polyacrylamides, polyamide resins, etherified melamine compounds and melamine-formaldehyde compounds, and etherified urea-formaldehyde resins, and comprising oxygen compounds of one or more elements selected from the group formed by the alkaline earth elements and zinc.

2. A display screen comprising a phosphor layer as claimed in claim 1, **characterized in that** the phosphor composition additionally includes polycarboxylates, gelatin or silicon dioxide.

3. A display screen comprising a phosphor layer as claimed in claim 1, **characterized in that** the solids content of the water-soluble organic binder in the phosphor layer ranges from 0.01% by weight to 1.0% by weight with respect to the phosphor, that the content of the oxygen compounds of the alkaline earth elements and zinc in the phosphor layer ranges from 0.01 % by weight to 0.80% by weight with respect to the phosphor, and that the silicon dioxide content, calculated as SiO₂, in the phosphor layer ranges from 0.01% by weight to 1.0% by weight with respect to the phosphor.

4. A display screen comprising a phosphor layer as claimed in claim 1, **characterized in that** the water-soluble organic binder has a molecular mass below 300,000, particularly below 100,000.

5. A display screen comprising a phosphor layer as claimed in claim 1, **characterized in that** the water-soluble organic binder is a polyurethane compound having a molecular mass below 20,000.

6. A display screen comprising a phosphor layer as claimed in claim 1, **characterized in that** the oxygen compound is a zinc-oxygen compound.

7. A display screen comprising a phosphor layer as claimed in claim 1, **characterized in that** the silicon dioxide is composed of silicate particles or of colloidal SiO₂ particles having an average particle size of 4 nm < d < 150 nm, corresponding to a specific surface area of 25 m²/g < Aₛ < 550 m²/g.

8. A display screen comprising a phosphor layer as claimed in claim 1, **characterized in that** the weight ratio of the SiO₂ particles (calculated as SiO₂) relative to the overall quantity of the metal-oxygen compounds of the alkaline earth elements and zinc lies in the range of 1:10 to 30:1, and the weight ratio of the SiO₂ particles relative to the overall quantity of the organic binder lies in the range of 1:30 to 30:1.

9. A display screen comprising a phosphor layer as claimed in claim 1, **characterized in that** the coating includes 0.01% by weight to 15% by weight of a color filter pigment.

10. A display screen comprising a phosphor composition as claimed in claim 1, **characterized in that** the water-soluble organic binder comprises a compound selected from the group formed by the polyacrylamides and gelatin, and at least a compound selected from the group formed by the etherified melamine compounds and melamine-formaldehyde compounds and the etherified urea-formaldehyde resins, the weight ratio of the compounds selected from the group formed by the polyacrylamides and gelatin relative to the overall quantity of the compounds selected from the group formed by the etherified melamine compounds and melamine-formaldehyde compounds and the etherified urea-formaldehyde resins ranging from 1:5 to 20:1.

11. A phosphor composition of a phosphor with a coating comprising a water-soluble organic binder, which is selected from the group formed by the polyurethanes, polyacrylamides, polyamide resins, etherified melamine compounds and melamine-formaldehyde compounds, etherified urea-formaldehyde resins, and comprising oxygen compounds of one or more elements selected from the group formed by the alkaline earth elements and zinc.

## Revendications

1. Ecran avec une couche luminescente contenant une préparation de produit luminescent composée d'une substance luminescente dotée d'une couche de revêtement avec un liant organique hydrosoluble sélectionné dans le groupe des polyuréthanes, des polyacrylamides, des résines de polyamide, des composés éthérifiés de mélamine et de mélamine-formaldéhyde et des résines éthérifiées d'urée-formaldéhyde et avec des composés d'oxygène d'un ou plusieurs éléments sélectionnés dans le groupe des éléments alcalino-terreux et du zinc.

2. Ecran avec une couche luminescente selon la revendication 1,
**caractérisé en ce que**
la préparation de produit luminescent contient par ailleurs des polycarboxylates, de la gélatine ou du dioxyde de silicium.

3. Ecran avec une couche luminescente selon la revendication 1,
**caractérisé en ce que**
la proportion de matières solides du liant organique hydrosoluble dans la couche luminescente s'élève à 0,01% en poids à 1,0 % en poids par rapport à la substance luminescente, que la proportion des composés oxygénés des éléments alcalino-terreux et du zinc dans la couche luminescente s'élève à 0,01% en poids à 0,80% en poids par rapport à la substance luminescente et que la proportion du dioxyde de silicium calculé comme SiO₂ dans la couche luminescente s'élève à 0,01% en poids à 1,0% en poids par rapport à la substance luminescente.

4. Ecran avec une couche luminescente selon la revendication 1,
**caractérisé en ce que**
le liant organique hydrosoluble a une masse moléculaire inférieure à 300.000 et, en particulier, une masse moléculaire inférieure à 100.000.

5. Ecran avec une couche luminescente selon la revendication 1,
**caractérisé en ce que**
le liant organique hydrosoluble est un composé de polyuréthane d'une masse moléculaire inférieure à 20.000.

6. Ecran avec une couche luminescente selon la revendication 1,
**caractérisé en ce que**
le composé d'oxygène est un composé oxygéné de zinc.

7. Ecran avec une couche luminescente selon la revendication 1,
**caractérisé en ce que**
le dioxyde de silicium se compose de particules de silicate ou de particules colloïdales de SiO₂ d'un diamètre moyen des particules de 4nm < d < 150 nm correspondant à une superficie spécifique de 25 m²/g < Aₛ < 550 m²/g.

8. Ecran avec une couche luminescente selon la revendication 1,
**caractérisé en ce que**
la proportion en poids des particules de SiO₂ (calculé comme SiO₂) par rapport à la quantité totale de composés oxygénés métalliques des éléments alcalino-terreux et du zinc s'élève à 1:10 à 30:1 et la proportion en poids entre les particules de SiO₂ et la quantité totale de liant organique s'élève à 1:30 à 30:1.

9. Ecran avec une couche luminescente selon la revendication 1,
**caractérisé en ce que**
le revêtement contient 0,01% en poids à 15% en poids d'un pigment de filtre coloré.

10. Ecran avec une préparation de produit luminescent selon la revendication 1,
**caractérisé en ce que**
le liant organique hydrosoluble contient un composé sélectionné dans le groupe des polyacrylamides et de la gélatine et au moins un composé sélectionné dans le groupe des composés éthérifiés de mélamine et de mélamine-formaldéhyde et de résines éthérifiées d'urée-formaldéhyde, la proportion en poids des composés sélectionnés dans le groupe des polyacrylamides et de la gélatine par rapport à la quantité totale des composés sélectionnés dans le groupe des composés éthérifiés de mélamine et de mélamine-formaldéhyde et des résines éthérifiées d'urée-formaldéhyde s'élève à 1:5 à 20:1.

11. Préparation de produit luminescent à partir d'une substance luminescente dotée d'une couche de revêtement avec un liant organique hydrosoluble sélectionné dans le groupe des polyuréthanes, des polyacrylamides, des résines de polyamide, des composés éthérifiés de mélamine et de mélamine-formaldéhyde et des résines éthérifiées d'urée-formaldéhyde et avec des composés d'oxygène d'un ou plusieurs éléments sélectionnés dans le groupe des éléments alcalino-terreux et du zinc.
